# EUROPEAN PATENT APPLICATION

(11) **EP 4 560 663 A2**
(43) Date of publication of application: **28.05.2025**
(21) Application number: 24205770.1
(22) Date of filing: 10.10.2024
(51) Int. Cl.: H01G 4/12, H01G 4/30, C04B 35/468, C04B 35/465, C04B 35/462

(54) **MULTILAYER ELECTRONIC COMPONENT**

(30) Priority: 21.11.2023 KR 20230161893
(71) Applicant: Samsung Electro-Mechanics Co., Ltd., Suwon-si, Gyeonggi-do (KR)
(72) Inventor: Kwon, Hyung Soon, Suwon-si, Gyeonggi-do (KR); Kim, Hyoung Uk, Suwon-si, Gyeonggi-do (KR); Jin, Hye Jin, Suwon-si, Gyeonggi-do (KR); Koo, Bon Hyeong, Suwon-si, Gyeonggi-do (KR)
(74) Representative: Grünecker Patent- und Rechtsanwälte PartG mbB

(57) **Abstract**

A multilayer electronic component includes a body including a dielectric layer and an internal electrode; and an external electrode disposed on the body, wherein the dielectric layer includes a main component represented by (Caₓ, Sr₁₋ₓ)(Zr_{y}, Ti_{1-y})O₃, and includes a first sub-component including rare earth elements including at least one of yttrium (Y), dysprosium (Dy), or terbium (Tb), a second sub-component including silicon (Si), and a third sub-component including variable valence acceptor elements, and wherein a content of rare earth elements of the first sub-component is 1.0 moles or higher and 2.0 moles or lower based on 100 moles of the main component.

## Description

### CROSS-REFERENCE TO RELATED APPLICATION(S)

This application claims benefit of priority to Korean Patent Application No. 10-2023-0161893 filed on November 21, 2023 in the Korean Intellectual Property Office, the disclosure of which is incorporated herein by reference in its entirety.

### BACKGROUND

### 1. FIELD

The present disclosure relates to a multilayer electronic component.

### 2. DESCRIPTION OF RELATED ART

A multilayer ceramic capacitor (MLCC), a multilayer electronic component, may be a chip condenser mounted on printed circuit boards of various electronic products including as image display devices such as a liquid crystal display (LCD) and a plasma display panel (PDP), a computer, a smartphone, a mobile phone, or the like, and charging or discharging electricity therein or therefrom.

Such a multilayer ceramic capacitor may be used as a component of various electronic devices since a multilayer ceramic capacitor may have a small size and high capacitance and may be easily mounted. As various electronic devices such as a computer and a mobile device have been designed to have a smaller size and higher output, demand for miniaturization and higher capacity of a multilayer ceramic capacitors has increased.

Types of multilayer ceramic capacitors may include Class I multilayer ceramic capacitors having high stability and low loss and used in circuits requiring high reliability or stability, and Class II multilayer ceramic capacitors having high efficiency and a small volume and used for bypassing or coupling.

Recently, the demand for products in Class I, satisfying C0G properties including reduced equivalent series resistance (ESR) and a high quality factor (Q) value, has been increased to reduce power consumption.

### SUMMARY

Some embodiments of the present disclosure is to provide a multilayer electronic component having low equivalent series resistance (ESR).

Some embodiments of the present disclosure is to provide a multilayer electronic component having a high Q value.

Some embodiments of the present disclosure is to provide a multilayer electronic component satisfying C0G properties.

According to some embodiments of the present disclosure, a multilayer electronic component includes a body including a dielectric layer and an internal electrode; and an external electrode disposed on the body, wherein the dielectric layer includes (Caₓ, Sr₁₋ₓ)(Zr_{y}, Ti_{1-y})O₃ as a main component, and includes a first sub-component including rare earth elements including at least one of yttrium (Y), dysprosium (Dy), or terbium (Tb), a second sub-component including silicon (Si), and a third sub-component including variable valence acceptor elements, and wherein a content of rare earth elements of the first sub-component is 1.0 moles or higher and 2.0 moles or lower based on 100 moles of the main component.

According to some embodiments of the present disclosure, a multilayer electronic component includes a body including a dielectric layer and an internal electrode; and an external electrode disposed on the body, wherein the dielectric layer includes a main component having a perovskite structure, represented as ABO₃, and a sub-component, wherein an A-site of the perovskite structure includes calcium (Ca) and strontium (Sr), and a B-site of the perovskite structure includes zirconium (Zr) and titanium (Ti), wherein the sub-component includes a first sub-component including rare earth elements including at least one of yttrium (Y), dysprosium (Dy), or terbium (Tb), a second sub-component including silicon (Si), and a third sub-component including variable valence acceptor elements, and wherein a content of rare earth elements of the first sub-component is 1.0 moles or higher and 2.0 moles or lower based on 100 moles of the B-site of the perovskite structure.

### BRIEF DESCRIPTION OF DRAWINGS

Some aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is an exploded perspective diagram illustrating a lamination structure of an internal electrode according to an embodiment of the present disclosure;
FIG. 3 is a cross-sectional diagram taken along line I-I' in FIG. 1;
FIG. 4 is a cross-sectional diagram taken along line II-II' in FIG. 1;
FIGS. 5A to 5C are STEP-IR graphs of test examples; and
FIGS. 6A to 6C are STEP-IR graphs of test examples.

### DETAILED DESCRIPTION

Hereinafter, some embodiments of the present disclosure will be described as below with reference to the accompanying drawings.

These embodiments are described in sufficient detail to enable those skilled in the art to practice the present embodiment. It is to be understood that the various embodiments of the present disclosure, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

As used herein, the term "a main component" means occupying 50% by mass or more, 50 mol% or more of the constituent components.

In the drawings, the first direction may be defined as a lamination direction or a thickness (T) direction, the second direction may be defined as a length (L) direction, and the third direction may be defined as a width (W) direction.

### Multilayer Electronic Component

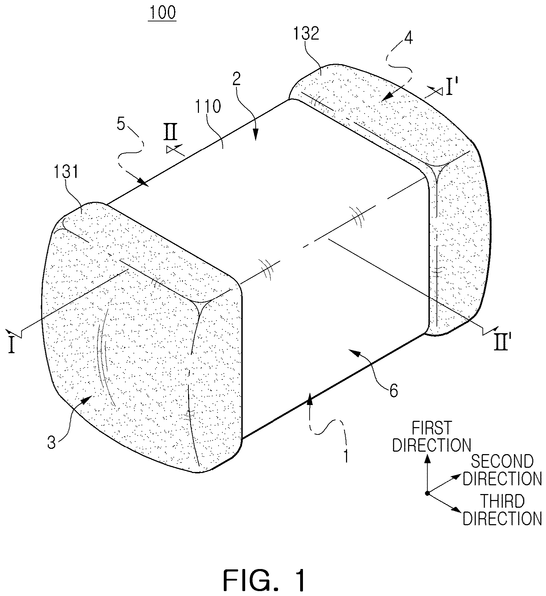

FIG. 1 is a perspective diagram illustrating a multilayer electronic component according to an embodiment.

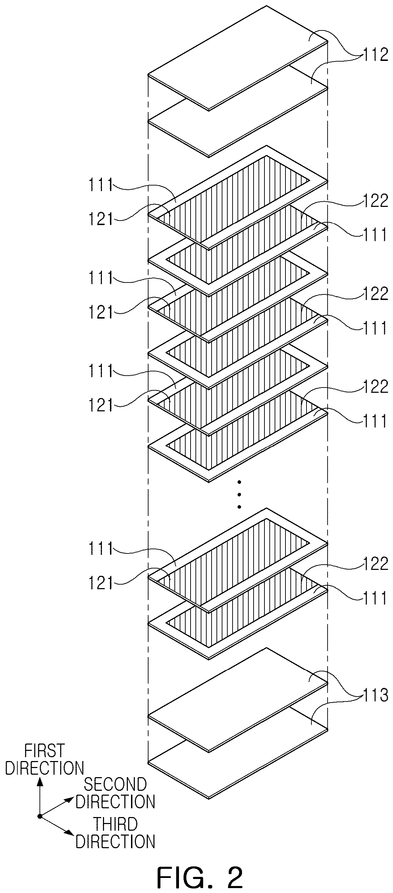

FIG. 2 is an exploded perspective diagram illustrating a lamination structure of an internal electrode according to an embodiment.

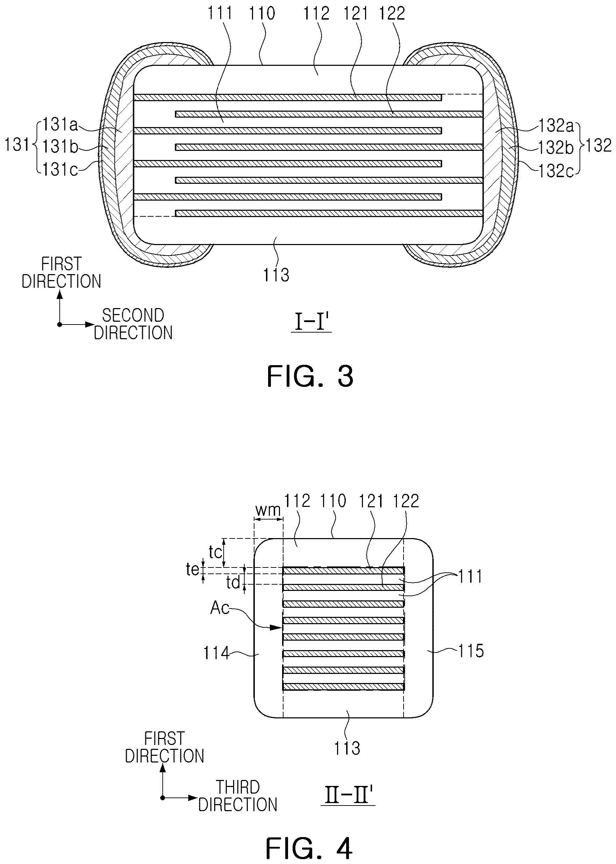

FIG. 3 is a cross-sectional diagram taken along line I-I' in FIG. 1.

FIG. 4 is a cross-sectional diagram taken along line II-II' in FIG. 1.

Hereinafter, a multilayer electronic component according to some embodiments of the present disclosure will be described in greater detail with reference to FIGS. 1 to 4. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

A multilayer electronic component 100 according to some embodiments may include a body 110 including a dielectric layer 111 and internal electrodes 121 and 122; and external electrodes 131 and 132 disposed on the body 110, and may include a first sub-component including rare earth elements including at least one of yttrium (Y), dysprosium (Dy), or terbium (Tb), a second sub-component including silicon (Si), and a third sub-component including variable valence acceptor elements.

Alternatively, the multilayer electronic component 100 according to another embodiments may include a body 110 including a dielectric layer 111 and internal electrodes 121 and 122; and external electrodes 131 and 132 disposed on the body 110, and the dielectric layer 111 may include a main component of a perovskite structure represented as ABO₃ and a sub-component, an A-site of the perovskite structure may include calcium (Ca) and strontium (Sr), and a B-site of the perovskite structure may include zirconium (Zr) and titanium (Ti), the sub-component may include a first sub-component including rare earth elements including at least one of yttrium (Y), dysprosium (Dy), or terbium (Tb), a second sub-component including silicon (Si), and a third sub-component including variable valence acceptor elements, and a content of the rare earth elements of the first sub-component may be 1.0 moles or higher and 2.0 moles or lower based on 100 moles of B-site of the perovskite structure.

The body 110 may have the dielectric layers 111 and the internal electrodes 121 and 122 alternately laminated.

More specifically, the body 110 may include a capacitance forming portion Ac disposed in the body 110 and forming capacitance including the first internal electrode 121 and the second internal electrode 122 alternately disposed to face each other with the dielectric layer 111 interposed therebetween.

The shape of the body 110 may not be limited to any particular shape, but as illustrated, the body 110 may have a hexahedral shape or a shape similar to a hexahedral shape. Due to reduction of ceramic powder included in the body 110 during a firing process, the body 110 may not have an exact hexahedral shape formed by linear lines but may have a substantially hexahedral shape.

The body 110 may have first and second surfaces 1 and 2 opposing each other in the first direction, third and fourth surfaces 3 and 4 connected to the first and second surfaces 1 and 2 and opposing in the second direction, and fifth and sixth surfaces 5 and 6 connected to the first to fourth surfaces 1, 2, 3, and 4 and opposing each other in the third direction.

The plurality of dielectric layers 111 forming the body 110 may be in a fired state, and a boundary between the adjacent dielectric layers 111 may be integrated with each other such that the boundary may not be distinct without using a scanning electron microscope (SEM).

Recently, as the demand for products satisfying C0G properties with a reduced equivalent series resistance (ESR) and a high quality factor (Q) has increased, it may be necessary to design an optimal composition ratio.

Here, the Q value may be represented as Q=1/DF=(1/ESR)*(1/ωC) (where ω=2πf) and may correspond to a reciprocal of a dissipation factor (DF). The dissipation factor may also be referred to as dielectric loss and may be represented as loss tangent (tan δ). The definition of dissipation factor may refer to the time rate at which electrical energy is converted into heat in the dielectric when an electric field changing over time is applied.

C0G properties may indicate C0G properties defined in the EIA standard, and may indicate the conditions in which, within the temperature range -55°C-125°C, a temperature coefficient α(10⁻⁶/K), which is the capacitance change rate, is 0, the temperature coefficient multiplier is -1, and the temperature coefficient tolerance is ±30ppm. In other words, COG properties may indicate the condition that 0±30ppm/°C is satisfied in the temperature range of -55°C-125°C.

The raw material forming the dielectric layer 111 is not limited as long as sufficient capacitance may be obtained, and generally, a perovskite (ABO₃) material may be used, but to satisfy the C0G properties, the dielectric layer 111 may include (Caₓ, Sr₁₋ₓ) (Zr_{y}, Ti_{1-y})O₃ (CSZT) as the main component, and may include the first sub-component including rare earth elements, the second sub-component including silicon (Si), and the third sub-component including variable valence acceptor elements.

Also, to satisfy C0G properties, when the ratio of calcium (Ca) in the A-sites of the perovskite structure is defined as x, the molecular ratio of strontium (Sr) is defined as 1-x, the molecular ratio of zirconium (Zr) in the B-site of the perovskite structure is defined as y, and the molecular ratio of titanium (Ti) is defined as 1-y, the dielectric layer 111 may include a first sub-component including rare earth elements as a sub-component, a second sub-component including silicon (Si), and a third sub-component including variable valence acceptor elements.

As for the raw materials forming the dielectric layer 111, various ceramic additives, organic solvents, binders, dispersants, or the like, may be added to the main component of CSZT in the embodiments.

In some embodiments, as an example of a more specific method of measuring the content of elements included in each component of the multilayer electronic component 100, in the case of the destruction method, components may be analyzed using an EDS mode of a scanning electron microscope (SEM), an EDS mode of a transmission electron microscope (TEM), or an EDS mode of a scanning transmission electron microscope (STEM). First, a thinly sliced analysis sample may be prepared using focused ion beam (FIB) equipment in the region including a dielectric microstructure such as a dielectric grain in a cross-section of the dielectric material which has been sintered. Thereafter, the damaged layer on the surface of the thinned sample may be removed using xenon (Xe) or argon (Ar) ion milling, and qualitative/quantitative analysis may be performed by mapping each component to be measured in the image obtained using SEM-EDS, TEM-EDS, or STEM-EDS. In this case, the qualitative/quantitative analysis graph of each component may be represented in terms of mass percentage (wt%), atomic percentage (at%), or moles percentage (mol%) of each element. In this case, the number of moles of a specific component may be represented by converting the number of moles of another specific component.

As another method, the chip may be pulverized, the region including a dielectric microstructure may be selected, and the component in the region including a dielectric microstructure may be analyzed using devices such as inductively coupled plasma spectrometry (ICP-OES) and inductively coupled plasma mass spectrometry (ICP-MS).

Here, in some embodiments, x may satisfy 0.5 ≤ x < 1.0, y may satisfy 0.950 ≤ y < 1.00. In some embodiments, × may satisfy 0.6 ≤ x ≤ 0.8, and y may satisfy 0.960 ≤ y ≤ 0.980. In some embodiments, x may be 0.7 and y may be 0.97.

Here, as x satisfies 0.5 ≤ x < 1.0 and y satisfies 0.950 ≤ y < 1.00, C0G properties may be satisfied.

The sub-component may include the first sub-component including rare earth elements.

Differently from barium titanate (BaTiO₃) dielectric material, a dielectric constant of C0G material including CSZT may be implemented by ion polarization, not dipole polarization. Accordingly, when rare earth elements are added to the C0G dielectric material, rare earth elements may increase interfacial resistance, thereby improving reliability, but when the elements are partially substituted or solid-solved into the lattice, the elements may act as a defect interfering with ion polarization, which has an adverse effect in terms of ion polarization. Accordingly, energy consumption required to implement the dielectric constant may increase, such that a dissipation factor may increase and a Q value may also decrease.

Accordingly, by controlling grain growth and allowing size distribution of dielectric grains to be uniform by adding the first sub-component, reliability may be improved.

Here, the rare earth elements may include at least one of yttrium (Y), dysprosium (Dy), or terbium (Tb).

In this case, the content of rare earth elements of the first sub-component may be 1.0 moles or higher and 2.0 moles or lower based on 100 moles of the CSZT main component, or may be 1.0 moles or higher and 2.0 moles or lower based on 100 moles of B-site of perovskite structure.

Hereinafter, for ease of description, the CSZT main component will be described, which will be applied to the description of the B-site of the perovskite structure.

The content of the rare earth elements of the first sub-component may satisfy 1.0 moles, 1.1 moles, 1.2 moles. 1.3 moles, 1.4 moles, 1.5 moles, 1.6 moles, 1.7 moles, 1.8 moles, 1.9 moles or higher and 2.0 moles, 1.9 moles, 1.8 moles, 1.7 moles, 1.6 moles, 1.5 moles, 1.4 moles, 1.3 moles, 1.2 moles, 1.1 moles or lower based on 100 moles of the CSZT main component, such that reliability of the multilayer electronic component may be improved.

When the content of rare earth elements of the first sub-component is less than 1.0 moles based on 100 moles of the CSZT main component, reliability may be insufficient, and when the content of the first sub-component exceeds 2.0 moles based on 100 moles of the CSZT main component, the Q value may decrease.

Thereafter, the sub-component may include a second sub-component including silicon (Si).

The second sub-component may act as a sintering aid, and may reduce the sintering temperature and facilitate sintering properties by reacting with the main component or other sub-components.

The content of silicon (Si) of the second sub-component may be 0.95 moles or higher based on 100 moles of the CSZT main component, or may be 0.95 moles or higher based on 100 moles of the B-site of the perovskite structure.

As the content of silicon (Si) of the second sub-component satisfies 0.95 moles or higher based on 100 moles of the CSZT main component, sintering density of the dielectric layer may be sufficiently implemented. For example, the average sintering density of the dielectric layer may be implemented at 4.66g/cm³ or more.

An upper limit value of the content of silicon (Si) of the second sub-component is not limited to any particular example to sufficiently implement sintering density of the dielectric layer, and may be, for example, 1.35 moles or lower.

Here, sintering density may indicate bulk density among true density, apparent density, and bulk density, but the embodiment of the present disclosure is not limited thereto, and sintering density may indicate true density or apparent density, and there may be almost no difference in density values.

Sintering density may be measured using, for example, a buoyancy-based Archimedes method. More specifically, the sintering density may be measured using an electron mirror, also used as a hydrometer, using the Archimedes principle, and when it is assumed that the density of water is 1, sintering density may be obtained by calculating the bulk density, which is one of the sintering densities. Here, bulk density may be represented as {dry weight/(saturated weight-underwater weight)}, where dry weight is the weight of the sample in a state without water, underwater weight is the weight measured by suspending the sample in water, and saturated weight may be the weight measured after wiping only the surface of the sample immersed in water.

As another method, the sintering density may be measured by measuring the weight (g) of the sample, measuring the size of the sample in the first direction, and calculating the volume by measuring the size in the second direction, and the size in the third direction. However, the method is not limited thereto.

Thereafter, the sub-component may include a third sub-component including variable valence acceptor elements.

Here, the variable valence acceptor elements may include at least one selected from the group consisting of manganese (Mn), vanadium (V), chromium (Cr), iron (Fe), cobalt (Co), nickel (Ni), copper (Cu), zinc (Zn), and combinations thereof, and may include manganese (Mn), but the embodiments of the present disclosure are not limited thereto.

In this case, the content of the variable valence acceptor elements of the third sub-component may be 1.0 moles or higher 3.0 moles or lower based on 100 moles of the main component, or may be 1.0 moles or higher 3.0 moles or lower based on 100 moles of B-site of perovskite structure.

The third sub-component may provide reduction resistance, may improve densification of the dielectric microstructure, and may maintain stable high temperature acceleration.

The content of the variable valence acceptor elements of the third sub-component may satisfy 1.0 moles or higher 3.0 moles or lower based on 100 moles of the CSZT main component, reliability of the multilayer electronic component may be improved.

When the content of the variable valence acceptor elements of the third sub-component is less than 1.0 moles based on 100 moles of the CSZT main component, density may be reduced such that reliability may not be sufficient, and when the content of the third sub-component exceeds 3.0 moles based on 100 moles of the CSZT main component, the high temperature acceleration may deteriorate.

The microstructure of the dielectric layer 111 of the multilayer electronic component may include a dielectric grain boundary disposed between a dielectric grain and a dielectric grain adjacent thereto.

To improve reliability of the dielectric material with C0G properties, by securing a relatively large number of dielectric grain boundaries by increasing a fraction of dielectric grain boundaries, it may be necessary to prevent deterioration of insulation resistance.

When comparing resistance in the dielectric microstructure, it is known that a resistance value of a grain boundary may be relatively larger than a resistance value in the grain.

The reason why a resistance value of the grain boundary is greater than a resistance value in the grain may be explained by the Schottky barrier model in the interfacial region. Generally, a space charge layer having a high concentration of ions or electrons, that is, a depletion layer, may be formed near the grain boundary. When a specific element is distributed at a high concentration to the grain boundary, the Fermi level may increase, and the Schottky barrier height may increase, such that a depletion layer may increase.

Accordingly, since a tunneling phenomenon of the charge carrier due to thermionic activation is prevented, the effect of increasing reliability may be expected.

In embodiments, in presenting the composition and the content of the main component and the first to third sub-component, which are dielectric materials, during solid-solution or grain boundary segregation within CSZT, by lowering charge density or increasing a fraction of grain boundary, reliability may be improved.

A thickness td of the dielectric layer 111 may not be limited to any particular example.

However, to ensure reliability of the multilayer electronic component 100 in a high voltage environment, the thickness of the dielectric layer 111 may be 10.0 µm or less. Also, to implement miniaturization and high capacitance of the multilayer electronic component 100, the thickness of the dielectric layer 111 may be 3.0 um or less. To more easily implement ultra-miniaturization and high capacitance, the thickness of the dielectric layer 111 may be 1.0 um or less, preferably 0.6 um or less, and more preferably 0.4 um or less.

Here, the thickness td of the dielectric layer 111 may refer to an average thickness of the dielectric layer 111 disposed between the first and second internal electrodes 121 and 122.

The thickness td of the dielectric layer 111 may refer to the size of the dielectric layer 111 in the first direction. Also, the thickness td of the dielectric layer 111 may refer to the average thickness td of the dielectric layer 111 and may refer to the average size of the dielectric layer 111 in the first direction.

The average size of the dielectric layer 111 in the first direction may be measured by scanning a cross-section in the first and second directions of the body 110 using a scanning electron microscope (SEM) with a magnification of 10,000. More specifically, the average size of the dielectric layer 111 in the first direction may indicate the average value calculated by measuring the sizes of the dielectric layer 111 in the first direction at 10 points at an equal distance in the second direction in the scanned image. Also, by extending the measurement of the average value to ten dielectric layers 111, the average size of the dielectric layer 111 in the first direction may be further generalized.

The internal electrodes 121 and 122 may be alternately laminated with the dielectric layer 111.

The internal electrodes may include a first internal electrode 121 and a second internal electrode 122. The first and second internal electrodes 121 and 122 may be alternately disposed to face each other with the dielectric layer 111 included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. The first external electrode 131 may be disposed on the third surface 3 of the body 110 and may be connected to the first internal electrode 121, and the second external electrode 132 may be disposed on the fourth surface 4 of the body 110 and may be connected to the second internal electrode 122.

That is, the first internal electrode 121 may not be connected to the second external electrode 132 and may be connected to the first external electrode 131, and the second internal electrode 122 may not be connected to the first external electrode 131 and may be connected to the second external electrode 132. In this case, the first and second internal electrodes 121 and 122 may be electrically separated from each other by the dielectric layer 111 disposed therebetween.

The body 110 may be formed by alternately laminating ceramic green sheets on which the first internal electrodes 121 are printed and ceramic green sheets on which the second internal electrodes 122 are printed, and firing the sheets.

The material for forming the internal electrodes 121 and 122 is not limited to any particular example, and any materials having excellent electrical conductivity may be used. For example, the internal electrodes 121 and 122 may include one or more selected from the group consisting of nickel (Ni), copper (Cu), palladium (Pd), silver (Ag), gold (Au), platinum (Pt), tin (Sn), tungsten (W), titanium (Ti), and alloys thereof.

Also, the internal electrodes 121 and 122 may be formed by printing conductive paste for internal electrodes including one or more selected from the group consisting of nickel (Ni), copper (Cu), palladium (Pd), silver (Ag), gold (Au), platinum (Pt), tin (Sn), tungsten (W), titanium (Ti), and alloys thereof on a ceramic green sheet. A screenprinting method or a gravure printing method may be used as a method of printing the conductive paste for internal electrodes, but the disclosure of the present embodiment thereof is not limited thereto.

The thickness te of the internal electrodes 121 and 122 may not be limited to any particular example.

However, to ensure reliability of the multilayer electronic component 100 in a high voltage environment, the thickness te of the internal electrodes 121 and 122 may be 3.0 µm or less. Also, to implement miniaturization and high capacitance of the multilayer electronic component 100, the thickness of the internal electrodes 121 and 122 may be 1.0 µm or less. To easily implement ultra-miniaturization and high capacitance, the thickness of the internal electrodes 121 and 122 may be 0.6 um or less, and according to some embodiment, 0.4 um or less.

Here, the thickness te of the internal electrodes 121 and 122 may refer to the size of the internal electrodes 121 and 122 in the first direction. Also, the thickness te of the internal electrodes 121 and 122 may refer to the average thickness te of the internal electrodes 121 and 122, and may refer to the average size of the internal electrodes 121 and 122 in the first direction.

The average size of the internal electrodes 121 and 122 may be measured by scanning a cross-section of the body 110 in the first direction using a scanning electron microscope (SEM) with a magnification of 10,000. More specifically, an average value may be measured from the sizes of the internal electrode at 10 points at an equal distance in the second direction in the scanned image. The 10 points at an equal distance may be designated in the capacitance formation portion Ac. Also, by extending the measurement of the average value to 10 internal electrodes, the average size of the internal electrodes 121 and 122 may be further generalized.

In some embodiments, the average thickness td of at least one of the plurality of dielectric layers 111 and the average thickness te of at least one of the plurality of internal electrodes 121 and 122 may satisfy 2×te < td.

In other words, the average thickness td of the dielectric layer 111 may be greater than twice the average thickness te of one of the internal electrodes 121 and 122. Preferably, the average thickness td of the plurality of dielectric layers 111 may be greater than twice the average thickness te of the plurality of internal electrodes 121 and 122.

Generally, a high-voltage electronic component may have an issue in reliability due to a decrease in breakdown voltage (BDV) in a high-voltage environment.

Accordingly, to prevent a decrease in breakdown voltage under a high voltage environment, by configuring the average thickness td of the dielectric layer 111 to be larger than twice the average thickness te of the internal electrodes 121 and 122, the thickness of the dielectric layer, which is the distance between the internal electrodes, may be increased and breakdown voltage properties may be improved.

When the average thickness td of the dielectric layer 111 is less than twice the average thickness te of the internal electrodes 121 and 122, the average thickness of the dielectric layer, which is the distance between the internal electrodes, may be reduced such that the breakdown voltage may decrease, and a short may occur between the internal electrodes.

The body 110 may include cover portions 112 and 113 disposed on both end-surfaces in the first direction of the capacitance forming portion Ac.

More specifically, the body 110 may include a first cover portion 112 disposed on one surface in the first direction of the capacitance formation portion Ac and a second cover portion 113 disposed on the other surface in the first direction of the capacitance formation portion Ac. More specifically, the body 110 may include the upper cover portion 112 disposed in the upper portion in the first direction of the capacitance formation portion Ac and the lower cover portions 113 disposed in the lower portion in the first direction of the capacitance formation portion Ac.

The upper cover portion 112 and the lower cover portion 113 may be formed by laminating a single dielectric layer 111 or two or more dielectric layers 111 on the upper and lower surfaces of the capacitance forming portion Ac in a first direction, and may prevent damages to the internal electrodes 121 and 122 due to physical or chemical stress.

The upper cover portion 112 and the lower cover portion 113 may not include the internal electrodes 121 and 122 and may include the same material as that of the dielectric layer 111. That is, the upper cover portion 112 and the lower cover portion 113 may include a ceramic material, for example, a barium titanate (BaTiO₃) ceramic material.

The thickness tc of the cover portion 112 and 113 may not need to be limited to any particular example.

However, to easily implement miniaturization and high capacitance of multilayer electronic components, the thickness tc of the cover portions 112 and 113 may be 100 um or less, preferably 30 um or less. More preferably, the thickness may be 20 um or less in an ultra-small product.

Here, the thickness tc of the cover portion 112 or 113 may refer to the size in the first direction of the cover portion 112 or 113. Also, the thickness tc of the cover portions 112 and 113 may refer to the average thickness tc of the cover portions 112 and 113, and may refer to the average size in the first direction of the cover portions 112 and 113.

The average size of the cover portions 112 and 113 may be measured by scanning a cross-section in the first and second directions of the body 110 using a scanning electron microscope (SEM) at a magnification of 10,000. More specifically, the average size may indicate the average value calculated by measuring the sizes in the first direction at 10 points at an equal distance in the second direction in the scanned image of the cover portion.

Also, the average size in the first direction of the cover portion measured by the above method may be substantially the same as the average size in the first direction of the cover portion in the cross-section in the first and third directions of the body 110.

The multilayer electronic component 100 may include side margin portions 114 and 115 disposed on both end-surfaces in the third direction of the body 110.

More specifically, the side margin portions 114 and 115 may include a first side margin portion 114 disposed on the fifth surface 5 and a second side margin portion 115 disposed on the sixth surface 6 of the body 110.

As illustrated, the side margin portions 114 and 115 may refer to a region between both end-surfaces in the third direction of the first and second internal electrodes 121 and 122 and the boundary surface of the body 110 with respect to the cross-section in the first and third directions of the body 110.

The side margin portions 114 and 115 may be formed by forming internal electrodes 121 and 122 on a ceramic green sheet by applying a conductive paste other than the region in which the side margin portions 114 and 115 are formed, cutting the laminated internal electrodes 121 and 122 to expose the fifth and sixth surfaces 5 and 6 of the body 110 to prevent a step difference caused by the internal electrodes 121 and 122, and laminating a single dielectric layer 111 or two or more dielectric layers 111 in the third direction on both end-surfaces in the third direction of the capacitance forming portion Ac.

The side margin portions 114 and 115 may prevent damages to the internal electrodes 121 and 122 due to physical or chemical stress.

The first side margin portion 114 and the second side margin portion 115 may not include the internal electrodes 121 and 122 and may include the same material as that of the dielectric layer 111. That is, the first side margin portion 114 and the second side margin portion 115 may include a ceramic material, for example, a barium titanate (BaTiO₃) ceramic material.

The width wm of the first and second side margin portions 114 and 115 may not be limited to any particular example.

However, to easily implement miniaturization and high capacitance of the multilayer electronic component 100, the width wm of the side margin portions 114 and 115 may be 100 µm or less, preferably 30 um or less, and may be more preferably 20 µm or less in an ultra-small product.

Here, the width wm of the side margin portions 114 and 115 may refer to the size of the side margin portions 114 and 115 in the third direction. Also, the width wm of the side margin portions 114 and 115 may refer to the average width wm of the side margin portions 114 and 115, and the average size in the third direction of the side margin portions 114 and 115.

The average size in the third direction of the side margin portion 114 and 115 may be measured by scanning a cross-section in the first and third directions of the body 110 using a scanning electron microscope (SEM) at a magnification of 10,000. More specifically, the average size may be an average value measured from the sizes in the third direction at 10 points at an equal distance in the first direction in the scanned image of one of the side margin portions.

In some example embodiments, the ceramic electronic component 100 may have two external electrodes 131 and 132, but the number of the external electrodes 131 and 132 or the shape thereof may be varied depending on the forms of the internal electrode 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Also, the external electrodes 131 and 132 may extend and be disposed on a portion of the first and second surfaces 1 and 2 of the body 110, or may extend and be disposed on a portion of the fifth and sixth surfaces 5 and 6 of the body 110. That is, the first external electrode 131 may be disposed on a portion of the first, second, fifth, and sixth surfaces 1, 2, 5, and 6 of the body 110, and the third surface 3 of the body 110, and the second external electrode 132 may be disposed on a portion of the first, second, fifth, and sixth surfaces 1, 2, 5, and 6 of the body 110, and the third surface 3 of the body 110.

The external electrodes 131 and 132 may be formed of any materials having electrical conductivity, such as metal, and a specific material may be determined in consideration of electrical properties and structural stability, and the external electrodes 131 and 132 may have a multilayer structure.

For example, the external electrodes 131 and 132 may include an electrode layer disposed on the body 110 and a plating layer disposed on the electrode layer.

For a more specific example of the electrode layer, the electrode layer may include first electrode layers 131a and 132a, which are fired electrodes including a first conductive metal and glass, or second electrode layers 131b and 132b, which are resin-based electrodes including second conductive metal and resin.

Here, the conductive metal included in the first electrode layers 131a and 132a may be referred to as a first conductive metal, and the conductive metal included in the second electrode layers 131b and 132b may be referred to as a second conductive metal. In this case, the first conductive metal and second conductive metal may be the same or different from each other, and when a plurality of conductive metals are included, only a portion thereof may include the same conductive metal, but an example embodiment thereof is not limited.

Also, the first electrode layers 131a and 132a, and the second electrode layers 131b and 132b may be formed by disposing a fired electrode and a resin-based electrode on the body 110 in order.

Also, the first electrode layers 131a and 132a, and the second electrode layers 131b and 132b may be formed by transferring a sheet including a conductive metal onto the body, and a sheet including a conductive metal onto the fired electrode.

A material having excellent electrical conductivity may be used as a conductive metal included in the first electrode layers 131a and 132a, and the second electrode layers 131b and 132b. For example, the conductive metal may include one or more selected from a group consisting of nickel (Ni), copper (Cu), palladium (Pd), silver (Ag), gold (Au), platinum (Pt), tin (Sn), tungsten (W), titanium (Ti) and alloys thereof, but an example embodiment thereof is not limited thereto.

In some embodiments, the electrode layers 131 and 132 may have a two-layer structure including the first electrode layers 131a and 132a and the second electrode layers 131b and 132b, and accordingly, the external electrodes 131 and 132 may include first electrode layers 131a and 132a including a first conductive metal and glass, and second electrode layers 131b and 132b disposed on the first electrode layers 131a and 132a and including a second conductive metal and resin.

The first electrode layers 131a and 132a may improve bondability with the body 110 by including glass, and the second electrode layers 131b and 132b may improve warpage strength by including resin.

The first conductive metal included in the first electrode layers 131a and 132a is not limited to any particular examples as long as the material may be electrically connected to the internal electrodes 121 and 122 to form capacitance, and for example, the first conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof.

The first electrode layers 131a and 132a may be formed by applying a conductive paste prepared by adding glass frit to the first conductive metal particles and firing the paste.

The second conductive metal included in the second electrode layers 131b and 132b may allow the layers to be electrically connected to the first electrode layers 131a and 132a, respectively.

The conductive metal included in the second electrode layers 131b and 132b is not limited to any particular example as long as the material may be electrically connected to the electrode layers 131a and 132a, and may include one or more selected from a group consisting of nickel (Ni), copper (Cu), palladium (Pd), silver (Ag), gold (Au), platinum (Pt), tin (Sn), tungsten (W), titanium (Ti) and alloys thereof.

The second conductive metal included in the second electrode layers 131b and 132b may include one or more of spherical particles or flake-type particles. In other words, the conductive metal may only include flake-type particles, only spherical particles, or may be a mixture of flake-type particles and spherical particles. Here, spherical particles may include shapes not completely spherical, for example, shapes in which the length ratio (major axis/minor axis) between the major axis and the minor axis is 1.45 or less. The flake-type particles may indicate particles having a flat and elongated shape, and are not limited to any particular example, and for example, the length ratio between the major axis and the minor axis (major axis/minor axis) may be 1.95 or more. The length of the major axis and the minor axis of the spherical particles and the flake-type particles may be measured from an image obtained by scanning the cross-sections in first and second direction of the central portion in the third direction of the multilayer electronic component using a scanning electron microscope (SEM).

The resin included in the second electrode layers 131b and 132b may secure bondability and may absorb impacts. The resin included in the second electrode layers 131b and 132b is not limited to any particular examples as long as the resin has bondability and impact absorption properties and may be mixed with second conductive metal particles to create a paste, and may include, for example, an epoxy resin

Also, the second electrode layers 131b and 132b may include a plurality of metal particles, an intermetallic compound and a resin. By including an intermetallic compound, electrical connectivity with the first electrode layers 131a and 132a may be improved. The intermetallic compound may improve electrical connectivity by connecting a plurality of metal particles to each other, and may surround a plurality of metal particles and may connect the metal particles to each other.

In this case, the intermetallic compound may include a metal having a melting point lower than a curing temperature of the resin. That is, as the intermetallic compound includes a metal having a melting point lower than the curing temperature of resin, the metal having a melting point lower than the curing temperature of the resin may melt during a drying and curing process, and may form an intermetallic compound with a portion of the metal particles and may surround the metal particles. In this case, the intermetallic compound may include a low melting point metal, preferably below 300°C.

For example, Sn having a melting point of 213-220°C may be included. During the drying and hardening process, Sn may be melted, and the melted Sn may wet metal particles at high melting points such as Ag, Ni, or Cu by capillary action, may react with a portion of Ag, Ni or Cu metal particles and may form intermetallic compounds such as Ag₃Sn, Ni₃Sn₄, Cu₆Sn₅, or Cu₃Sn. Ag, Ni or Cu not participating in the reaction may remain in the form of metal particles.

Accordingly, the plurality of metal particles in the second electrode layers 131b and 132b may include one or more of Ag, Ni and Cu, and the intermetallic compound may include one or more of Ag₃Sn, Ni₃Sn₄, Cu₆Sn₅ and Cu₃Sn.

The plating layers 131c and 132c may improve mounting properties.

The type of the plating layers 131c and 132c is not limited to any particular examples, and the plating layers 131c and 132c may be single-layer plating layers 131c and 132c including at least one selected from the group consisting of nickel (Ni), tin (Sn), palladium (Pd), and alloys thereof, and may be formed in a plurality of layers.

For a more specific example of the plating layers 131c and 132c, the plating layers 131c and 132c may include Ni plating layers or Sn plating layers, and Ni plating layers and Sn plating layers may be formed in order on the electrode layers, and a Sn plating layer, a Ni plating layer, and a Sn plating layer may be formed in order. Also, the plating layers 131c and 132c may include a plurality of Ni plating layers and/or a plurality of Sn plating layers.

The size of the multilayer electronic component 100 may not be limited to any particular examples.

However, to implement both miniaturization and high capacitance, the number of laminates may need to be increased by reducing the thickness of the dielectric layer and the internal electrode, such that the effect described in the embodiments may be noticeable in the multilayer electronic component 100 having a size of 3216 (length × width: 3.2mm × 1.6mm) or less.

Hereinafter, the embodiments of the present disclosure will be described in greater detail, but the scope of the embodiment is not limited thereto.

### (Test example)

[Table 1] lists Q values according to the type and content of rare earth elements, which are the first sub-component.

In each test example, the main component and other sub-components were added identically, other than the configuration in which the type and content of the first sub-component, rare earth elements, were applied differently. The content of the first to third sub-component was added based on 100 moles of the main component.

(Caₓ, Sr₁₋ₓ) (Zr_{y}, Ti_{1-y})O₃ (CSZT), a dielectric material, was used as the main component (here, x=0.7, y=0.97), as a second sub-component, silicon (Si) was added at 0.95 moles or higher based on 100 moles of the CSZT main component, and as a third sub-component, 2.0 moles of manganese (Mn) was added based on 100 moles of the CSZT main component.

In test examples 1-1 to 1-4, 0.5 moles, 1.0 moles, 2.0 moles, and 2.6 moles of yttrium (Y) were added based on 100 moles of the CSZT main component, respectively, and in test examples 2-1 to 2-4, 0.5 moles, 1.0 moles, 2.0 moles, and 2.6 moles of dysprosium (Dy) were added based on 100 moles of the CSZT main component, respectively, and in test examples 3-1 to 3-4, 0.5 moles, 1.0 moles, 2.0 moles, and 2.6 moles of terbium (Tb) were added based on 100 moles of the CSZT main component, respectively.

The Q values of the manufactured sample chips were measured, and when the Q value was 10,000 or more, the sample was evaluated as good and marked "O." When the Q value was less than 10,000, the sample was evaluated as defective and marked "X." The Q value was measured using 4268A of Keithley, an LCR meter measuring device.

**[Table 1]**

| Test No. | Content of rare earth element (mol) | Q value | Evaluation |
|---|---|---|---|
| Test example 1-1 | 0.5 | 32217 | O |
| Test example 1-2 | 1.0 | 18365 | O |
| Test example 1-3 | 2.0 | 14697 | O |
| Test example 1-4 | 2.6 | 3181 | X |
| Test example 2-1 | 0.5 | 10013 | O |
| Test example 2-2 | 1.0 | 11213 | O |
| Test example 2-3 | 2.0 | 11315 | O |
| Test example 2-4 | 2.6 | 2868 | X |
| Test example 3-1 | 0.5 | 14546 | O |
| Test example 3-2 | 1.0 | 12016 | O |
| Test example 3-3 | 2.0 | 10831 | O |
| Test example 3-4 | 2.6 | 3670 | X |

In test examples 1-4, 2-4, and 3-4 in which the content of rare earth elements corresponded to 2.6 moles, exceeding 2.0 moles, the Q value was measured to be less than 10,000, and the dielectric loss was relatively large. In test examples 1-1 to 1-3, 2-1 to 2-3, and 3-1 to 3-3 in which the content of rare earth elements was 2.0 moles or lower, the Q value was measured to be 10,000 or higher, and the dielectric loss was relatively small.

Thus, it is indicated that, when the content of rare earth elements was 2.0 moles or lower based on 100 moles of the CSZT main component, the Q value did not decrease and the dielectric loss was relatively small.

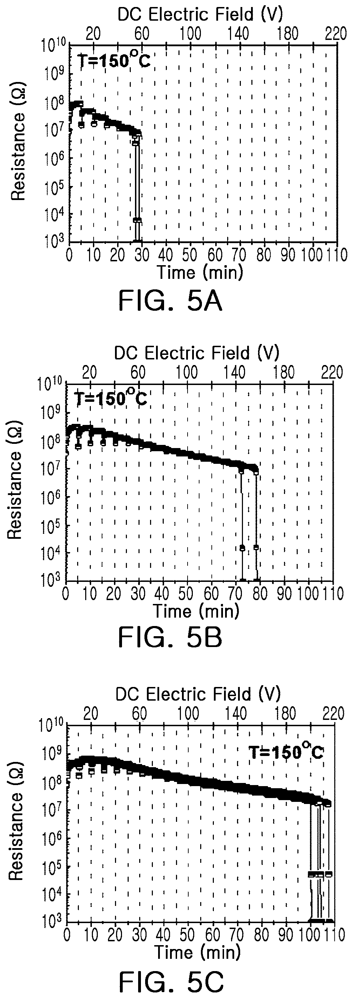

Thereafter, FIG. 5A is a STEP-IR graph of test example 1-1, FIG. 5B is a STEP-IR graph of test example 1-2, and FIG. 5C is a STEP-IR graph of test example 1-3.

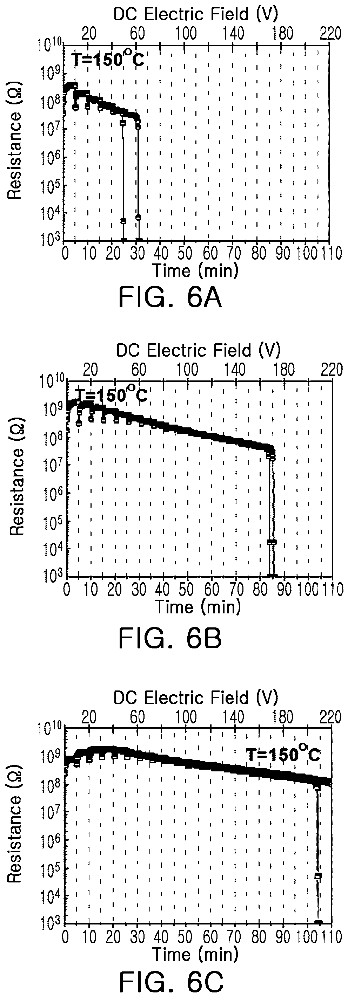

FIG. 6A is a STEP-IR graph of test example 2-1, FIG. 6B is a STEP-IR graph of test example 2-2, and FIG. 6C is a STEP-IR graph of test example 2-3.

The STEP-IR test may determine whether a short of the chip appears under the harsh conditions in which the voltage increases by 10 V per 5 minutes at a temperature of 150°C, and may indicate whether reliability improves or deteriorates depending on the mean time to failure (MTTF).

In test examples 1-1 and 2-1 in which the content of rare earth elements was 0.5 moles, which is less than 1.0 moles, the mean time to failure (MTTF), which is the time when a chip short occurred relatively quickly, was short, which indicates that reliability deteriorated under the harsh conditions. In test examples 1-2, 1-3, 2-2, and 2-3 in which the content of rare earth elements was 1.0 moles or higher and 2.0 moles or lower, as compared to test example 1-1 and 2-1, the mean time to failure (MTTF), which is the time when a short occurs in the chip, increased, indicating that reliability was excellent even under the harsh conditions.

Thus, it is indicated that reliability was excellent when the content of rare earth elements was 1.0 moles or higher and 2.0 moles or lower based on 100 moles of the CSZT main component.

It is indicated from test example 1-1 to 1-3, 2-1 to 2-3 and 3-1 to 3-3 that, when the content of rare earth elements was 1.0 moles or higher and 2.0 moles or lower based on 100 moles of the CSZT main component, the Q value was excellent and reliability was also improved and accordingly, both the high-Q properties and reliability required for C0G material may be assured.

[Table 2] below lists sintering density of the sample chip depending on the content of rare earth elements, the first sub-component, and the content of silicon (Si), the second sub-component.

In each test example, the main component and the third sub-component were added identically, other than the configuration in which the content of the first sub-component, rare earth elements, and the second sub-component, silicon (Si), were applied differently. The content of the first to third sub-component was added based on 100 moles of the main component.

As the main component, (Caₓ, Sr₁₋ₓ) (Zr_{y}, Ti_{1-y})O₃ (CSZT), a dielectric material, was used (here, x=0.7, y=0.97), and as the third sub-component, 2.0 moles of manganese (Mn) was added based on 100 moles of the CSZT main component.

In test examples 4-1 to 4-4, 1.0 moles of yttrium (Y) was added based on 100 moles of CSZT main component, and 0.75 moles, 0.95 moles, 1.15 moles, and 1.35 moles of silicon (Si) were added based on 100 moles of the CSZT main component, respectively.

In test examples 5-1 to 5-4, 2.0 moles of yttrium (Y) was added based on 100 moles of the CSZT main component, and 0.75 moles, 0.95 moles, 1.15 moles, and 1.35 moles of silicon (Si) were added based on 100 moles of the CSZT main component, respectively.

The average sintering density value (g/cm³) for the manufactured sample chip was measured, and when the density was 4.56g/cm³ or higher, which is more than 95% of the theoretical density of 4.8g/cm³ for the CSZT dielectric material, the sample was evaluated as good and marked "O," and when the density was 4.56g/cm³, the sample was evaluated as defective and marked "X."

**[Table 2]**

| Test No. | Content of silicon (Si) (mol) | Average sintering density(g/cm³ | Evaluation |
|---|---|---|---|
| Test example 4-1 | 0.75 | 4.53 | X |
| Test example 4-2 | 0.95 | 4.66 | O |
| Test example 4-3 | 1.15 | 4.68 | O |
| Test example 4-4 | 1.35 | 4.77 | O |
| Test example 5-1 | 0.75 | 4.52 | X |
| Test example 5-2 | 0.95 | 4.66 | O |
| Test example 5-3 | 1.15 | 4.69 | O |
| Test example 5-4 | 1.35 | 4.74 | O |

Under the condition that the content of rare earth elements satisfied 1.0 moles or higher and 2.0 moles or lower, in test examples 4-1 and 5-1 in which the content of silicon (Si) was 0.75 moles, the average sintering density values were measured to be 4.53g/cm³ and 4.52g/cm³, respectively, which indicates that sintering density was not excellent, such that the density of the dielectric microstructure deteriorated and the dielectric loss was relatively large. Under the condition that the content of rare earth elements satisfied 1.0 moles or higher and 2.0 moles or lower, in test examples 4-2 to 4-4 and 5-2 to 5-4 in which the content of silicon (Si) was 0.95 moles or higher, the average sintering density value was measured to be 4.66 g/cm³, which indicates that the sintering density was excellent, such that the dielectric microstructure density was excellent and the dielectric loss was relatively small.

Thus, when the content of silicon (Si) is 0.95 moles or higher based on 100 moles of the CSZT main component, it may be predicted that the average sintering density value may be excellent and the dielectric loss may be relatively small, and accordingly that high-Q properties required for C0G material may be assured.

According to the aforementioned embodiments, a multilayer electronic component may have a low equivalent series resistance (ESR).

Also, a multilayer electronic component may have a high Q value.

Also, a multilayer electronic component may satisfy C0G properties.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" "embodiments" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as relevant to the other embodiment unless otherwise indicated.

Terms used in the present specification are for explaining the embodiments rather than limiting the present disclosure. Unless explicitly described to the contrary, a singular form includes a plural form in the present specification

While the embodiments have been illustrated and described above, it will be configured as apparent to those skilled in the art that modifications and variations could be made without departing from the scope of the present disclosure as defined by the appended claims.

## Claims

1. A multilayer electronic component, comprising:
a body including a dielectric layer and an internal electrode; and
an external electrode disposed on the body,
wherein the dielectric layer includes:
a main component represented by (Caₓ, Sr₁₋ₓ) (Zr_{y}, Ti_{1-y})O₃,
a first sub-component including at least one of rare earth elements selected from the group consisting of yttrium (Y), dysprosium (Dy), and terbium (Tb),
a second sub-component including silicon (Si), and
a third sub-component including at least one variable valence acceptor elements,
wherein a content of the at least one of the rare earth elements of the first sub-component is 1.0 moles or higher and 2.0 moles or lower based on 100 moles of the main component.

2. The multilayer electronic component of claim 1, wherein x satisfies 0.5 ≤ x < 1.0, and y satisfies 0.950 ≤ y < 1.00.

3. The multilayer electronic component of claim 1, wherein a content of silicon (Si) of the second sub-component is 0.95 moles or higher based on 100 moles of the main component.

4. The multilayer electronic component of claim 3, wherein a content of silicon (Si) of the second sub-component is 0.95 moles or higher and 1.35 moles or lower based on 100 moles of the main component.

5. The multilayer electronic component of claim 1, wherein the variable valence acceptor elements include at least one selected from the group consisting of manganese (Mn), vanadium (V), chromium (Cr), iron (Fe), cobalt (Co), nickel (Ni), copper (Cu), zinc (Zn) and combinations thereof.

6. The multilayer electronic component of claim 1, wherein a content of the variable valence acceptor elements of the third sub-component is 1.0 moles or higher 3.0 moles or lower based on 100 moles of the main component.

7. The multilayer electronic component of claim 1, wherein an average sintering density of the dielectric layer is 4.66g/cm³ or more.

8. A multilayer electronic component, comprising:
a body including a dielectric layer and an internal electrode; and
an external electrode disposed on the body,
wherein the dielectric layer includes a main component having a perovskite structure represented as ABO₃, and a sub-component,
wherein an A-site of the perovskite structure includes at least one of calcium (Ca) or strontium (Sr), and a B-site of the perovskite structure includes at least one of zirconium (Zr) and titanium (Ti),
wherein the sub-component includes:
a first sub-component including at least one of rare earth elements selected from the group consisting of yttrium (Y), dysprosium (Dy), and terbium (Tb),
a second sub-component including silicon (Si), and
a third sub-component including variable valence acceptor elements, and
wherein a content of the at least one of the rare earth elements of the first sub-component is 1.0 moles or higher and 2.0 moles or lower based on 100 moles of the B-site of the perovskite structure.

9. The multilayer electronic component of claim 8, wherein, when a molecular ratio of calcium (Ca) in the A-site of the perovskite structure is defined as x, a molecular ratio of strontium (Sr) is defined as 1-x, a molecular ratio of zirconium (Zr) in the B-site of the perovskite structure is defined as y, and a molecular ratio of titanium (Ti) is defined as 1-y, x satisfies 0.5 ≤ x < 1.0, and y satisfies 0.950 ≤ y < 1.00.

10. The multilayer electronic component of claim 8, wherein a content of silicon (Si) of the second sub-component is 0.95 moles or higher based on 100 moles of the B-site of the perovskite structure.

11. The multilayer electronic component of claim 10, wherein a content of silicon (Si) of the second sub-component is 0.95 moles or higher 1.35 moles or lower based on 100 moles of the B-site of the perovskite structure.

12. The multilayer electronic component of claim 8, wherein the variable valence acceptor elements include at least one selected from the group consisting of manganese (Mn), vanadium (V), chromium (Cr), iron (Fe), cobalt (Co), nickel (Ni), copper (Cu), zinc (Zn) and combinations thereof.

13. The multilayer electronic component of claim 8, wherein a content of the variable valence acceptor elements of the third sub-component is 1.0 moles or higher 3.0 moles or lower based on 100 moles of the B-site of the perovskite structure.

14. The multilayer electronic component of claim 8, wherein an average sintering density of the dielectric layer is 4.66g/cm³ or more.
